# EUROPEAN PATENT APPLICATION

(11) **EP 2 894 550 A1**
(43) Date of publication of application: **15.07.2015**
(21) Application number: 15150325.7
(22) Date of filing: 07.01.2015
(51) Int. Cl.: G06F 3/0354, G06F 3/023, G06F 3/038

(54) **Media controller**

(30) Priority: 07.01.2014 US 201461924288 P
(71) Applicant: Acco Brands Corporation, Lake Zurich, IL 60047-8997 (US)
(72) Inventor: Robinson, Todd C., Belmont, CA 94002 (US); Bautista, Brian B., South San Francisco, CA 94123 (US); Weaver, Adam S., Jackson, CA 95642 (US); Campbell, Erik J., San Francisco, CA 94123 (US)
(74) Representative: EP&C

(57) **Abstract**

A media controller for controlling an electronic device includes a body having a communication portion, a stylus portion, and a control portion. The media controller also includes a short-range communication module positioned in the communication portion, a conductive tip supported by the stylus portion, an actuator supported by the control portion, and a processor positioned within the body. The processor is coupled to the short-range communication module. The processor is operable to send a first command, while in a first mode, to the electronic device using the short-range communication module, receive a user input through the actuator, and switch from the first mode to a second mode in response to the user input. The processor is further operable to send a second command, while in the second mode, to the electronic device using the short-range communication module. The second command is different than the first command.

## Description

### FIELD OF INVENTION

The present invention relates to multi-functional user interface devices that operate in various modes.

### SUMMARY

According to one aspect, the invention provides a media controller for controlling an electronic device. The media controller includes a body having a communication portion, a stylus portion, and a control portion. The media controller also includes a short-range communication module positioned in the communication portion, and a conductive tip supported by the stylus portion. The conductive tip is configured to interact with a touch sensitive screen of the electronic device. The media control further includes an actuator supported by the control portion, and a processor positioned within the body. The processor is coupled to the short-range communication module. The processor is operable to send a first command, while in a first mode, to the electronic device using the short-range communication module, receive a user input through the actuator, and switch from the first mode to a second mode in response to the user input. The processor is further operable to send a second command, while in the second mode, to the electronic device using the short-range communication module. The second command is different than the first command.

The media controller communicates various commands to the electronic device and enhances the user's interaction with the electronic device. The media controller interacts with an application module running on the electronic device and facilitates the performance of specific functions. For example, the media controller can be used to interact with a presentation application running on an electronic device (e.g., a laptop). In such embodiments, the media controller can direct when to change slides, when to enter and/or exit a presentation mode, when to launch an embedded media file, and the like.

The media controller can operate in different modes to customize the user's interaction with a particular electronic device or with a particular application running on the electronic device. For example, the media controller can operate in a first mode to facilitate interaction with a presentation application (as described above) and then switch to a second mode to facilitate interaction with a media playing application (e.g., a music or video player).

The media controller can be used to wirelessly control an electronic device or can be used as a stylus to directly interact with a touch sensitive screen. Since many electronic devices now include touch sensitive screens, the combination stylus and controller enhances the media controller's applicability, versatility, and portability for a user.

In a possible embodiment of the media controller the actuator is a first actuator, and the media controller further comprises a second actuator supported by the control portion, wherein the processor is operable to send the first command and the second command in response to actuation of the second actuator.

In a further embodiment the processor is operable to receive the user input through a combination of the first actuator and the second actuator.

In a possible embodiment of the media controller the user input is a first user input, and the processor is further operable to
- receive a second user input through the actuator,
- switch from the second mode to a third mode in response to the second user input, and
- send a third command, while in the third mode, to the electronic device using the short-range communication module, the third command being different than the first command and the second command.

In a possible embodiment of the media controller the actuator is a first actuator and the user input is a first user input, and the media controller further comprises a second actuator and a third actuator supported by the control portion, wherein the processor is operable to
- receive the first user input through a combination of the first actuator and the second actuator to operate in the second mode,
- receive a second user input through a combination of the first actuator and the third actuator,
- switch from the second mode to a third mode in response to the second user input, and
- send a third command, while in the third mode, to the electronic device using the short-range communication module, the third command being different than the first command and the second command.

In a possible embodiment of the media controller, the media controller further comprises a battery receptacle positioned within the body and coupled to the processor and the short-range communication module, wherein the battery receptacle is configured to receive a battery.

In a further embodiment the conductive tip is removable from the body to expose the battery receptacle.

In a possible embodiment of the media controller the communication portion, the stylus portion and the control portion are generally aligned along a longitudinal axis of the body, and the control portion is positioned between the communication portion and the stylus portion.

In a possible embodiment of the media controller the processor is operable to receive a data message from the electronic device, the data message including parameters for defining a new operational mode of the media controller.

According to another aspect, the invention provides a media controller for controlling an electronic device. The media controller includes a generally cylindrical body having a longitudinal axis. The generally cylindrical body includes a communication portion, a stylus portion, and a control portion aligned along the longitudinal axis. The media controller also includes a short-range communication module positioned in the communication portion, and a conductive tip supported by the stylus portion. The conductive tip is configured to interact with a touch sensitive screen of the electronic device. The media controller further includes a first actuator supported on a first side of the control portion, a plurality of actuators supported on a second side of the control portion, and a processor positioned within the body and coupled to the short-range communication module. The processor is operable to send a first command, while in a first mode, to the electronic device using the short-range communication module in response to actuation of one of the plurality of actuators, receive a user input through the first actuator, switch from the first mode to a second mode in response to the user input, and send a second command, while in the second mode, to the electronic device using the short-range communication module in response to actuation of one of the plurality of actuators. The second command is different than the first command.

In a possible embodiment of the media controller according to this aspect the media controller further comprises a laser device supported by the generally cylindrical body, wherein one of the plurality of actuators is coupled to the laser device to control the laser device.

The invention also relates to a method of controlling an electronic device with a media controller. The media controller includes a body having a communication portion, a stylus portion, and a control portion. The media controller also includes a short-range communication module positioned in the communication portion, a conductive tip supported by the stylus portion, an actuator supported by the control portion, and a processor positioned within the body and coupled to the short-range communication module. The method includes interacting with a touch sensitive screen of the electronic device using the conductive tip, sending a first command, while in a first mode, to the electronic device using the short-range communication module, and receiving a user input through the actuator. The method also includes switching from the first mode to a second mode in response to the user input, and sending a second command, while in the second mode, to the electronic device using the short-range communication module. The second command is different than the first command.

In a possible embodiment of the method the actuator is a first actuator, wherein the media controller further includes a second actuator supported by the control portion, wherein sending the first command includes sending the first command, while in the first mode, in response to actuation of the second actuator, and wherein sending the second command includes sending the second command, while in the second mode, in response to actuation of the second actuator.

Possibly, receiving the user input includes receiving the user input through a combination of the first actuator and the second actuator.

In a possible embodiment of the method the user input is a first user input, and further comprises:
- receiving a second user input through the first actuator;
- switching from the second mode to a third mode in response to the second user input; and
- sending a third command, while in the third mode, to the electronic device using the short-range communication module, the third command being different than the first command and the second command.

In a possible embodiment of the method the actuator is a first actuator and the user input is a first user input, wherein the media controller further includes a second actuator and a third actuator supported by the control portion, and the method further comprises:
- receiving the first user input through a combination of the first actuator and the second actuator to operate in the second mode;
- receiving a second user input through a combination of the first actuator and the third actuator;
- switching from the second mode to a third mode in response to the second user input; and
- sending a third command, while in the third mode, to the electronic device using the short-range communication module, the third command being different than the first command and the second command.

In a possible embodiment of the method the media controller includes a memory positioned within the body, and the method further comprises:
- receiving a wireless message from an electronic device, the wireless message including parameters for defining a new operational mode; and
- storing the new operational mode in the memory.

In particular, defining the new operational mode may include assigning a function to the actuator that is different than the first command and the second command.

In a possible embodiment of the method the media controller includes a memory positioned within the body, and the method further comprises:
- receiving a wireless message from an electronic device, the wireless message including parameters for adjusting the first mode; and
- storing the parameters for adjusting the first mode in the memory.

In particular, adjusting the first mode may include assigning a function to the actuator that is different than the first command.

Other aspects of the invention will become apparent by consideration of the detailed description and accompanying drawings.

### BRIEF DESCRIPTION OF THE DRAWINGS

Fig. 1 is a perspective view of a media controller according to an embodiment of the invention.
Fig. 2 is a schematic diagram of the media controller.
Fig. 3 is a table illustrating different operational modes for the media controller.
Fig. 4 is a flowchart depicting a method of switching operational modes of the media controller.
Fig. 5 is a flowchart depicting a method of creating a new operational mode for the media controller.
Figs. 6-10 illustrate an exemplary GUI to facilitate creating the new operational mode.
Fig. 11 is an exploded perspective view of the media controller.
Fig. 12 is a bottom plan view of the media controller with a cover in a first position.
Fig. 13 is a top plan view of the media controller with the cover in a second position.
Fig. 14 is cross-sectional view of the media controller taken along section line 12-12 of Fig. 12.
Fig. 15 is an enlarged cross-sectional view of a portion of the media controller within box B of Fig. 14 with the cover in the first position.
Fig. 16 is an enlarged cross-sectional view of the portion of the media controller with in box B of Fig. 14 with the cover in the second position.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

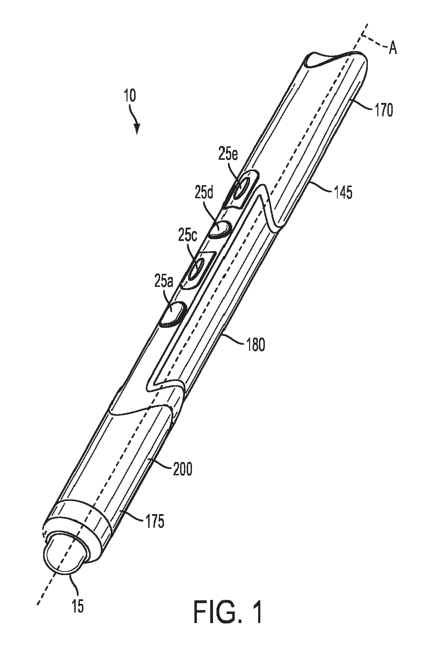

Fig. 1 illustrates a media controller 10 for communicating with and controlling an electronic device. The media controller 10 communicates various commands to the electronic device and enhances the user's interaction with the electronic device. The media controller 10 interacts with an application module running on the electronic device and facilitates the performance of specific functions. For example, the media controller 10 can be used to interact with a presentation application running on an electronic device (e.g., a laptop). In such embodiments, the media controller 10 can direct when to change slides, when to enter and/or exit a presentation mode, when to launch an embedded media file, and the like.

The media controller 10 can operate in different modes to customize the user's interaction with a particular electronic device or with a particular application running on the electronic device. For example, the media controller 10 can operate in a first mode to facilitate interaction with a presentation application (as described above) and then switch to a second mode to facilitate interaction with a media playing application (e.g., a music or video player).

The media controller 10 also includes a stylus that facilitates a user's interaction with various touch screen environments. Therefore, the media controller 10 can be used to wirelessly control an electronic device or can be used as a stylus to directly interact with a touch sensitive screen. Since many electronic devices now include touch sensitive screens, the combination stylus and controller enhances the media controller's 10 applicability, versatility, and portability for a user.

The electronic device may be, for example, a tablet computer, a desktop computer, a laptop computer, a smartphone, a smartboard, or the like. The electronic device can run different operating systems such as, for example, an Android® operating system, iOS, Windows®, and the like. The electronic device can also run different applications such as a presentation application (e.g., PowerPoint®), an image gallery application, an internet browser application, a music player application, and the like.

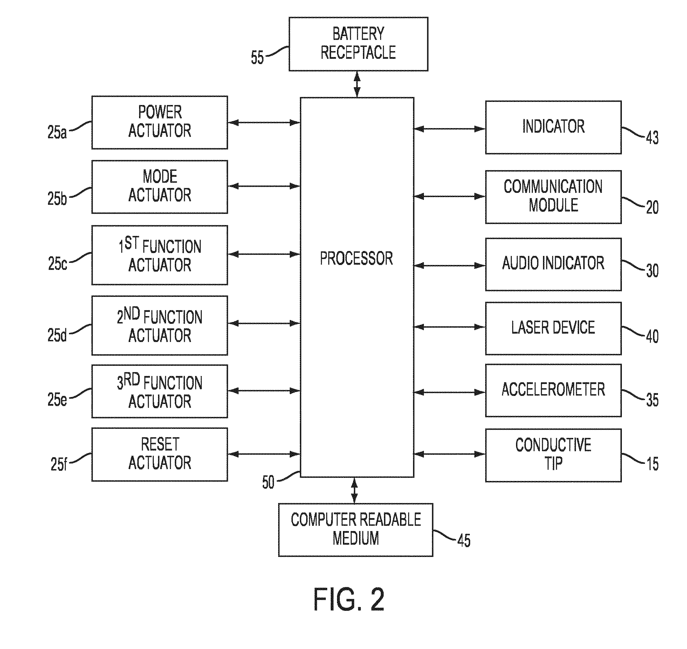

As shown in Fig. 2, the illustrated media controller 10 includes a conductive tip 15, a short-range communication module 20, control actuators 25a-f, an audio indicator 30, an accelerometer 35, a laser device 40, an indicator 43, a computer readable medium 45 (e.g., a memory module), a processor 50, and a battery receptacle 55. The audio indicator 30 provides audio feedback to the user regarding the operation of the media controller 10. The audio indicator 30 may be a speaker coupled to the processor 50 and operable to output audio messages as indicated by the processor 50. The audio indicator 30 may alternatively be a buzzer that provides short and/or long bursts of audio to indicate, for example, that a particular control actuator 25a-f was pressed, the operation mode of the media controller 10 has changed, or that the media controller 10 operates in a particular mode.

The accelerometer 35 is coupled to the processor 50 and detects movement of the media controller 10. The media controller 10 can then interact with the electronic device not only through the use of the control actuators 25a-f, but also with the general movement of the media controller 10. For example, if a user moves the media controller 10 with a flicking action toward the right side, the media controller 10 may send a command to the electronic device to perform a first action (e.g., advance one slide forward in a presentation application). If, on the other hand, the user moves the media controller 10 toward the left side, the media controller 10 may send a command to the electronic device to perform a second action different than the first action (e.g., retrocede one slide back in the presentation application). In other embodiments, the media controller 10 does not include the audio indicator 30 and/or the accelerometer 35.

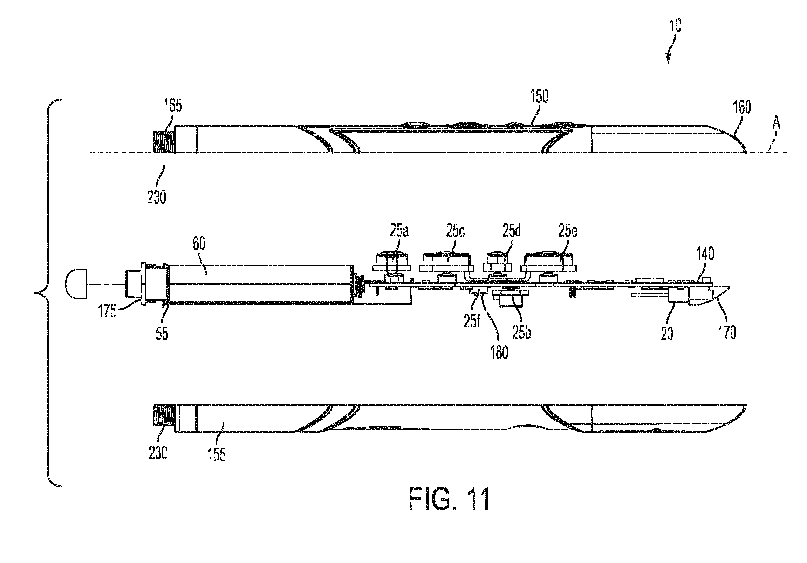

The battery receptacle 55 is configured to receive a removable battery 60 and/or battery pack as shown in Fig. 11. The battery receptacle 55 is coupled to the processor 50, the conductive tip 15, the short-range communication module 20, and the laser device 40. In the illustrated embodiment, the battery receptacle 55 transfers power to the processor 50 which then distributes electrical power to the conductive tip 15, the communication module 20, and the laser device 40. In other embodiments, however, each electrical component (e.g., the conductive tip 15, the communication module 20, and the laser device 40) is connected to the battery receptacle 55 independently (e.g., via a power bus in the media controller 10). In the illustrated embodiment, the battery receptacle 55 receives a conventional AAAA battery to power the electrical components of the media controller 10. In the illustrated embodiment, the battery may provide sufficient power storage to supply power to the media controller 10 for approximately one week (e.g., based on average use). In other embodiments, the battery receptacle 55 receives a different size battery and/or more batteries. In other embodiments, the battery receptacle 55 includes a power port and receives a non-removable, rechargeable battery. The rechargeable battery can then be recharged through the power port.

The conductive tip 15 enables the media controller 10 to be used as a stylus for touch sensitive screens. In the illustrated embodiment, the conductive tip 15 is compatible with capacitive touch screens such that when the conductive tip 15 is touched against a touch screen, the charge distribution associated with the touch screen changes, thereby indicating a user input to the electronic device. The conductive tip 15 can additionally or alternatively operate with electronic devices having digitizers. In such embodiments, the conductive tip 15 and the electronic device can determine not only the location of the user input (i.e., where the user touches the touch screen), but also the pressure associated with the user input. In other embodiments, the conductive tip 15 includes a pressure sensor that is coupled to the processor 50 and/or the communication module 20. The pressure sensor may send information to the electronic device via the communication module 20 regarding the amount of pressure applied by the user at a particular point. In some embodiments, the electronic device runs an application that responds differently (e.g., performs different actions) based on the level of pressure applied by the user.

The control actuators 25a-f include a laser actuator 25a, a mode actuator 25b, a first function actuator 25c, a second function actuator 25d, a third function actuator 25e, and a reset actuator 25f. The laser actuator 25a and the function actuators 25c-e are located on a first, or top, side of the controller 10. The mode actuator 25b and the reset actuator 25f are located on a second, or bottom, side of the controller 10 opposite the other actuators 25a, 25c-e. In some embodiments, the media controller 10 also includes a separate, power actuator to turn the controller 10 on and off. In other embodiments, the media controller 10 may automatically alternate between different levels of sleep to conserve battery power.

The mode actuator 25b enables the media controller 10 to switch between different operational modes. In the illustrated embodiment, the media controller 10 changes operational modes based on which combination of control actuators 25a-e is pressed at the same time. For example, pressing the mode actuator 25b with the first function actuator 25c enables the media controller 10 to operate in the first operational mode, pressing the mode actuator 25b with the second function actuator 25d enables the media controller 10 to operate in a second operational mode, and pressing the mode actuator 25b with the third function actuator 25e enables the media controller 10 to operate in a third operational mode.

In the above description, the combination of control actuators determines the operational mode of the media controller 10 as long as the mode actuator 25b is one of the control actuators 25a-e being pressed. In other embodiments, however, the combination of control actuators 25a-e does not need to include the mode actuator 25b for the media controller 10 to operate in a different operational mode. For example, the media controller 10 could operate in the first mode when the first function actuator 25c and the second function actuator 25d are pressed at the same time, could operate in the second mode when the second function actuator 25d and the third function actuator 25e are pressed at the same time, and could operate in the third mode when the first function actuator 25c and the third function actuator 25e are pressed at the same time.

In other embodiments, the media controller 10 can change operational modes by toggling the operational mode with the mode actuator 25b. For example, pressing the mode actuator 25b once enables the media controller 10 to operate in a first operational mode, pressing the mode actuator 25b twice enables the media controller 10 to operate in a second operational mode, etc. In other embodiments, different types of actuation of the mode actuator 25b change the operational mode of the media controller 10. For example, a short and fast actuation of the mode actuator 25b may enable the media controller 10 to operate in the first mode while a sustained actuation of the mode actuator 25b may enable the media controller 10 to operate in a second mode. In the examples above, the media controller 10 is described as switching between three different operational modes. In some embodiments, the media controller 10 can alternate between more or less operational modes as stored by the computer readable medium 45.

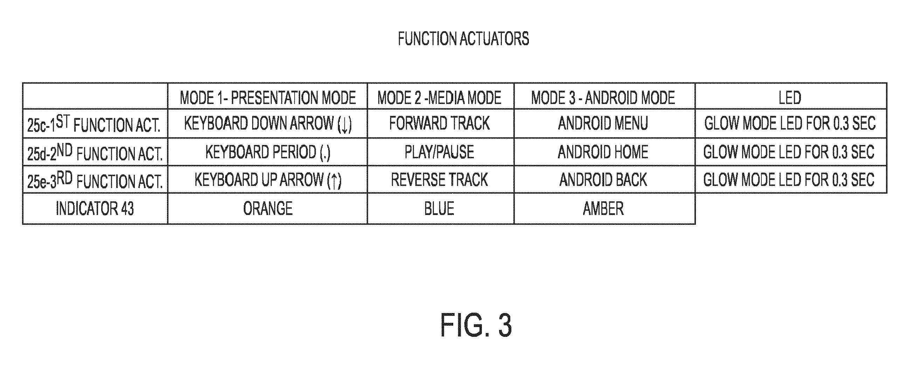

The indicator 43 is configured to indicate to the user different information regarding the use and operation of the media controller 10. In the illustrated embodiment, the indicator 43 is positioned under and/or around the mode actuator 25b such that the indicator 43 illuminates the mode actuator 25b. In other embodiments, the indicator 43 may be positioned elsewhere on the media controller 10 and may be separate from the mode actuator 25b. In the illustrated embodiment, the indicator 43 includes an LED. In other embodiments, the indicator 43 may be a liquid crystal display (LCD), an organic light emitting-diode display (OLED), or the like. As shown in the table of Fig. 3, the indicator 43 indicates the current operational mode of the media controller 10 by lighting in different colors according to the operational mode of the media controller 10. For example, Fig. 3 illustrates that when the media controller 10 is in Mode 1, the indicator 43 lights up orange. When the media controller 10 operates in Mode 2, the indicator lights up blue. When the media controller 10 operates in Mode 3, the indicator 43 lights up amber.

In some embodiments, instead of the indicator 43 lighting in different colors for each mode, the indicator 43 lights in the same color, but flashes at a different frequency. For example, when the media controller 10 operates in Mode 1, the indicator 43 lights slowly about once every 3 seconds, but when the media controller 10 operates in Mode 2, the indicator 43 lights more rapidly (e.g., about twice every second). In other embodiments, the indicator 43 may light a certain number of times to indicate the current operational mode of the media controller 10. For example, when the media controller 10 switches from Mode 1 to Mode 2, the indicator 43 may light up twice to indicate that the media controller 10 is entering the second mode. Therefore, the user can determine which mode the media controller 10 is currently operating at and determine whether or not to change the mode. In some embodiments, the indicator 43 may additionally or alternatively light up to indicate that one of the control actuators 25a-e was pressed. In such embodiments, the indicator may 43 light up for a short period of time (e.g., 0.3 seconds) every time a control actuator 25a-e is pressed, as also indicated in Fig. 3.

Each function actuator 25c-e is associated with a different function commanded to the electronic device. In other words, when a user actuates (e.g., presses) one of the function actuators 25c-e, the processor 50 sends a command to the electronic device to perform a specific function. When different function actuators 25c-e are pressed, the processor 50 sends different commands to the electronic device such that the media controller 10 remotely sends commands to the electronic device based on user input. These functions enhance the user's experience and interaction with different electronic devices. The functions performed by each function actuator 25c-e are also based on the operational mode of the media controller 10. In the illustrated embodiment, the media controller 10 operates in three different default operational modes. These three modes are stored in the computer readable medium 45, or memory. Mode 1 is a presentation mode that allows a user to interact with a presentation application. Mode 2 is a media mode that allows the user to interact with a media player. Mode 3 is an Android mode that allows the user to interact with an Android® device.

Fig. 3 illustrates how the function associated with each of the control actuators 25c-e changes based on the operational mode of the media controller 10. As shown in Fig. 3, when the media controller 10 is in Mode 1 (e.g., the presentation mode), the first function actuator 25c is configured to perform a similar function as a keyboard down arrow (e.g., next slide), the second function actuator 25d is configured to perform a similar function as a keyboard period (e.g., display a blank slide), and the third function actuator 25e is configured to perform a similar function as a keyboard up arrow (e.g., previous slide). As described above, when the media controller 10 is in Mode 1 and the first function actuator 25c is pressed, the processor 50 sends a command to the electronic device to perform the function of the keyboard down arrow. If a different function actuator 25c-e is pressed, then the processor 50 sends a different command to the electronic device according to the associated function of the function actuator 25c-e.

As also shown in Fig. 3, while the media controller 10 operates in Mode 2 (e.g., a media mode), the first function actuator 25c is configured to fast forward a track/chapter, the second function actuator 25d is configured to play or pause a media segment, and the third function actuator 25e is configured to rewind a media track/chapter. Additionally, while the media controller 10 operates in Mode 3 (e.g., the Android mode), the first function actuator 25c is configured to launch the Android menu, the second function actuator 25d is configured to return to the Android home (e.g., a homepage), and the third function actuator 25e is configured to execute the Android back function (e.g., backtrack to a previous page). The functions assigned to each function actuator 25c-e are exemplary and can be changed as desired. In other embodiments, the media controller 10 can have more or less function actuators 25c-e.

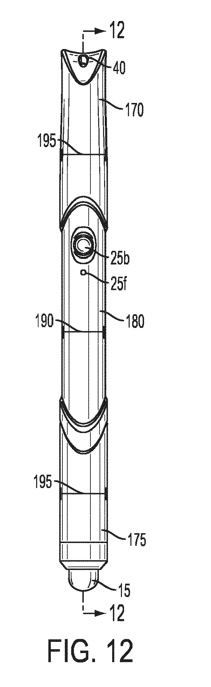

The reset actuator 25f allows the operation of the media controller 10 to be restored to a factory setting. In the illustrated embodiment, the reset actuator 25f is a pinhole access button (Fig. 12).

The laser device 40, or pointer, is coupled to the actuator 25a and generates a laser beam from one end of the controller 10. The actuator 25a is depressible by a user to selectively turn the laser device 40 on and off. When the actuator 25a is depressed, the laser device 40 is powered to emit a laser beam. When the actuator 25 is released (e.g., not depressed), the laser device 40 automatically turns off. In other embodiments, the actuator 25a may be a toggle-type button to turn the laser device 40 on and off. The laser actuator 25a and the laser device 40 may be used in, for example, the presentation mode to highlight something on a projected view of a presentation.

The communication module 20 is coupled to the processor 50 and is configured to enable communications between the electronic device and the media controller 10. In the illustrated embodiment, the short-range communication module 20 includes a Bluetooth ™ transceiver circuit. The short range communication module 20 also includes an antenna to enhance the ability of the communication module 20 to receive and send different wireless messages between the electronic device and the media controller 10. In other embodiments, the communication module 20 may include a different radio frequency (RF) transceiver, an infrared transceiver, an ultrasound transceiver, and/or other type of transceiver that is capable of two-way communication with an electronic device over a short distance (e.g., approximately ten meters).

The processor 50 is coupled to the communication module 20, the control actuators 25a-f, the audio indicator 30, the accelerometer 35, the laser device 40, and the computer readable medium 45. The processor 50 receives user inputs through the control actuators 25a-f and generates a command to send to the electronic device based on the user input by the control actuators 25a-f. The processor 50 then uses the communication module 20 to send the command to the electronic device. The processor 50 first determines which control actuator 25a-f was pressed to generate an appropriate command to the electronic device. For example, the processor 50 may detect that the reset actuator 25f was pressed, but a command does not need to be generated by the processor 50 in response to an actuation of the reset actuator 25f. However, as indicated by Fig. 3, when one of the function actuators 25c-e is pressed, the processor 50 generates a specific command to the electronic device.

The processor 50 is coupled to the computer readable medium 45 to access information regarding the different operational modes for the media controller 10. The computer readable medium 45 stores each of the functions associated with the respective function actuators 25a-f based on the operational mode of the media controller 10. In some embodiments, the computer readable medium 45 may store a table similar to the table shown in Fig. 3 to associate specific functions with specific function actuators 25c-e while in specific modes. In other embodiments, the computer readable medium 45 may use different methods to associate specific functions to the function actuators 25c-e based on the operational mode of the media controller 10. In some embodiments, the computer readable medium 45 also stores other information regarding the operation of the media controller 10. For example, the computer readable medium 45 may store battery voltage threshold, protection circuitry thresholds, and the like.

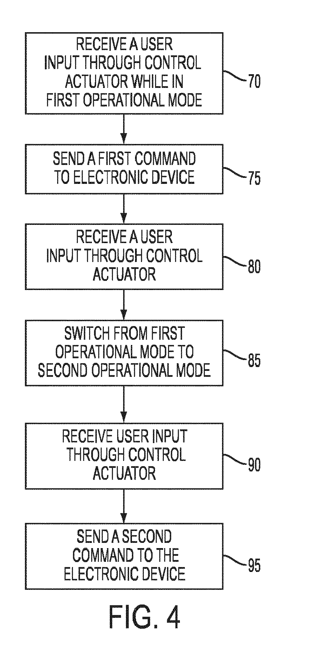

Fig. 4 illustrates a method implemented by the processor 50 to switch operational modes of the media controller 10. First at step 70, the processor 50 receives a user input through one of the control actuators 25a-f while operating in the first mode (e.g., Mode 1). In particular, the processor 50 receives the user input through one of the function actuators 25c-e. For the sake of example, the processor 50 receives a user input from the first function actuator 25c while the media controller 10 operates in Mode 1 (e.g., the presentation mode). The processor 50 then generates and sends a command through the communication module 20 according to the function associated with the function actuator that was pressed (step 75). In this example, the processor 50 generates and sends a command to the electronic device to perform the function of a down arrow key press (e.g., next slide).

The processor 50 then receives a second user input through the control actuators 25a-f (step 80). In this example, the processor 50 receives the second user input from the mode actuator 25b and the second control actuator 25d to switch modes. However, a different control actuator 25a-f, such as the first function actuator 25c, can generate the second user input for the processor 50. In some embodiments as discussed above, the second user input includes a different type of actuation from one control actuator 25a-f. The processor 50 recognizes the second user input as an indication to switch operational modes, and the processor 50 switches from the first mode (e.g., Mode 1) to the second mode (e.g., Mode 2) at step 85.

While operating in the second mode (e.g., Mode 2), the processor 50 receives a third user input through the control actuators 25a-f (step 90). In this particular example, the processor 50 receives the third user input from the first function actuator 25c (e.g., the function actuator that also generated the first user input). The processor 50 then recognizes that the function associated with the first function actuator 25c has changed because the operational mode of the media controller 10 has changed and, therefore, generates a second command to the electronic device to perform the function associated with the first function actuator 25c while in the second mode (e.g., Mode 2) at step 95. In this particular example, the second command instructs the electronic device to fast forward a track or media segment as shown in Fig. 3.

While the flowchart of Fig. 4 only illustrates switching between two different modes, as noted above, the media controller 10 can switch between three or more modes. A user may choose to change modes when he/she works with a different device. For example, while a user may prefer to use Mode 1 when interacting with PowerPoint® applications, digital photo album applications, or similar software, the user may prefer to use the Mode 3 when interacting with an Android® device such as a smartphone, a portable navigation device, or similar hand-held devices.

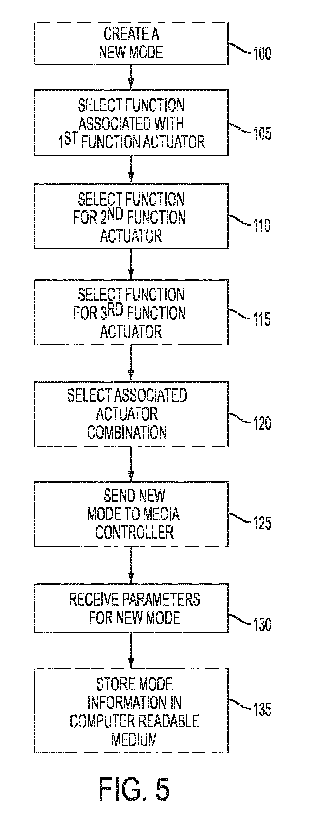

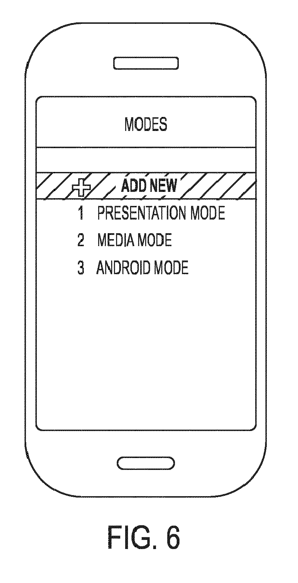

In the illustrated embodiment, Mode 3 is a user-defined (e.g., customized) mode. In general, the user defines different parameters for the customized mode using a graphical user interface (GUI) provided by an electronic device. The electronic device then communicates the user-defined parameters to the media controller 10, which then stores the user-defined mode in the computer readable medium 45. Fig. 5 depicts a method in which a user can interact with an electronic device to program mode information on the media controller 10. The processor 50 receives information regarding a user-defined mode. In other words, a user can create a mode not previously stored or executed by the media controller 10 using, for example, a graphical user interface provided by an electronic device. For example, the user may wish to efficiently use the media controller 10 to control the advancement of slides in a slideshow. Therefore, the user may create a new mode (step 100) such as, for example, "slide show mode," as shown by the exemplary graphical user interface of Fig. 6. The user then specifies which functions are associated with each function actuator 25c-e.

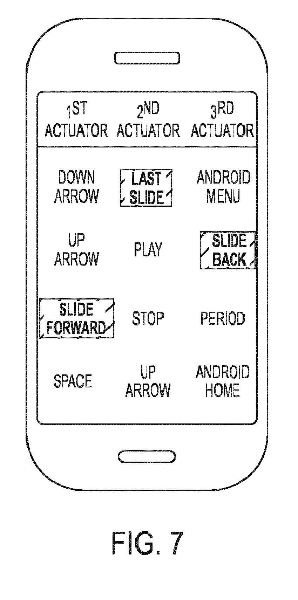

As shown in Figs. 5 and 7, the user may select from a predetermined list of actions/functions associated with each of the control actuators 25c-e. For example, for the slide show mode, the user may select the first function actuator 25c to advance a slide forward (step 105), the second function actuator 25d to jump to the last slide on the slide show (step 110), and the third function actuator 25e to retrocede a slide back (step 115). In some embodiments, rather than choosing from a predetermined list of actions/functions, the user can define the action/function to be associated with each function actuator 25c-e. For example, the user can demonstrate, via the GUI of the electronic device, what action a particular function actuator 25c-e is to perform. The electronic device then determines which action was performed by the user and assigns the same action to the particular function actuator 25c-e.

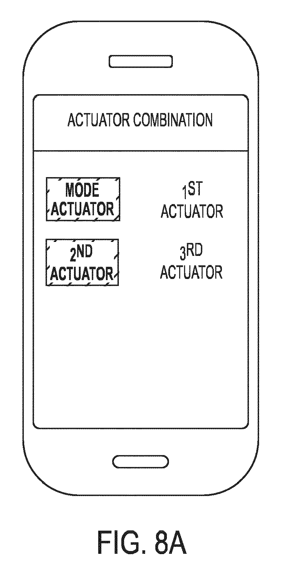

Once the user determines the functions or actions associated with each function actuator 25c-e, the user then determines which actuator 25a-f or combination of actuators 25a-f indicate to the processor 50 that the media controller 10 is to enter the newly user-defined mode (step 120), as shown in exemplary user interface of Fig. 8A. In the illustrated embodiment, the media controller 10 operates in the "slide show mode" when the mode actuator 25b and the second function actuator 25d are pressed at the same time. In the illustrated embodiment, the user-customized mode (e.g., Mode 3) is, by default, associated with the depression of the mode actuator 25b and the third function actuator 25e. In other words, the media controller 10 may be preprogrammed to associate the pre-programmed modes Mode 1 and Mode 2 with the actuation of the mode actuator 25b and the first function actuator 25c or the second function actuator 25d, respectively, and associate the user-defined mode Mode 3 with the actuation of the mode actuator 25b and the third function actuator 25e. Therefore, in the illustrated embodiment, the user does not need to define which combination of actuators 25a-f launches the user-defined mode (e.g., Mode 3) because Mode 3 is by default associated with the actuation of the mode actuator 25b and the third function actuator 25e.

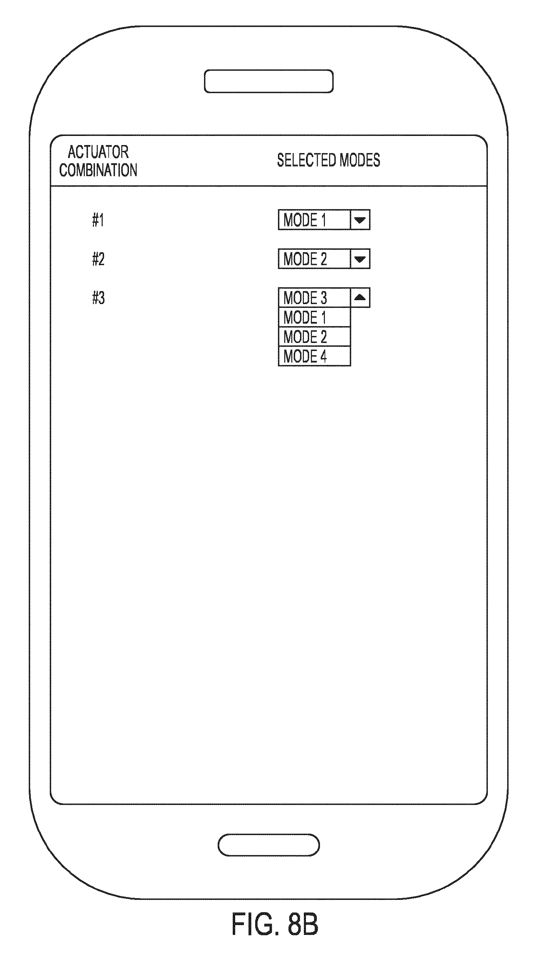

In some embodiments, the actuator combinations are not accessible to be programmed by the user. Rather, the user selects which mode is associated with a limited number of actuator combinations. For example, Fig. 8B illustrates an exemplary GUI for a user to determine which mode is launched for a limited number of actuator combinations. As shown in Fig. 8B, each actuator combination includes a drop down menu to select the mode associated with the actuator combination. The user can then select a mode for each actuator combination. In the illustrated embodiment, the "#1" combination refers to pressing the mode actuator 25b and the first function actuator 25c, the "#2" combination refers to pressing the mode actuator 25b and the second function actuator 25d, and the "#3" combination refers to pressing the mode actuator 25b and the third function actuator 25e. In other embodiments, the specific actuator combinations may be different.

In other embodiments, only the third actuator combination (e.g., "#3") can be programmed by the user with a different mode. In such embodiments, the first and second actuator combinations (e.g., "#1" and "#2") are set (e.g., not changeable) to Modes 1 and 2, respectively. Therefore, only the third actuator combination (e.g., "#3") includes the drop down menu or similar selection mechanism to select a particular mode. In such embodiments, the media controller 10 includes a combination of pre-programmed modes (e.g., Mode 1 and 2) launched by predetermined actuator combinations, and a custom mode (e.g., Mode 3) launched by another predetermined actuator combination.

Once the parameters for the user defined mode have been selected, the electronic device communicates the newly defined operational mode to the media controller 10 through the communication module 20 (step 125). In the illustrated embodiment, the electronic device sends a wireless message via Bluetooth ™. The wireless message includes information regarding the mode name, the applications with which the mode is compatible, and the actions associated with each actuator 25c-e while the media controller 10 operates in the customized mode. As discussed above, the wireless message may also include a specific actuator combination associated with the particular mode. The communication module 20 and the processor 50 then receive the information regarding the new user-defined mode (step 130), and store the information in the computer readable medium 45 (step 135) for execution by the processor 50. The electronic device used to define the user-defined mode can be, but does not need to be, the same electronic device with which the media controller 10 interacts. Because the communication module 20 is capable of two-way communication, a user may easily program the media controller 10 with a new user-defined mode and subsequently (e.g., almost immediately) use the media controller 10 to operate in that mode. Additionally, since the media controller 10 stores the information regarding the user-defined mode in the computer readable medium 45, the media controller 10 does not need to continuously communicate with the programming electronic device to execute the actions as established by the user-defined mode.

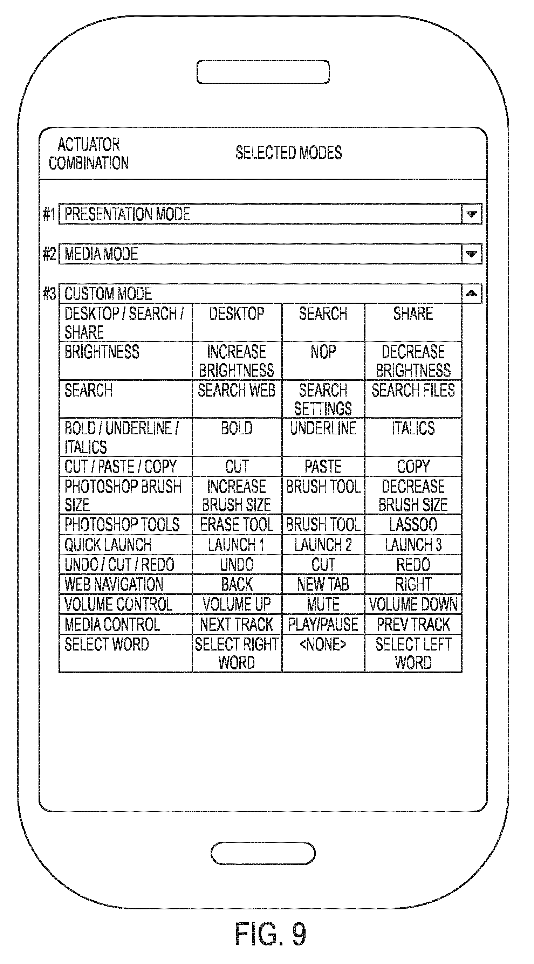

In some embodiments, the media controller 10 simplifies the process shown in Figs. 5-8B. Instead of forcing the user to select which functions/actions are associated with each function actuator 25c-e or which actuator combination is associated with each mode, the media controller 10 implements the first two modes (e.g., Mode 1 and Mode 2) using the first two actuator combinations (e.g., #1 and #2 from Fig. 8B), and reserves the third actuator combination as a custom mode. The user can then select from a variety of preprogrammed modes which mode is launched when the mode actuator 25b and the third function actuator 25e are pressed at the same time. Fig. 9 illustrates an exemplary GUI provided by an electronic device that allows the user to select which mode is associated with the third actuator combination (e.g., #3). As shown in the exemplary GUI, the third actuator combination (e.g., #3) may be used to launch a large variety of modes designed to enhance the user's interaction with different applications and/or electronic devices. As shown in Fig. 9, some exemplary modes include a brightness mode used to change the brightness of the electronic device, a search mode used to facilitate searching of webpages and/or files on the electronic device, a clipboard mode to facilitate cutting, pasting, and copying on the electronic device, and others as shown in Fig. 9.

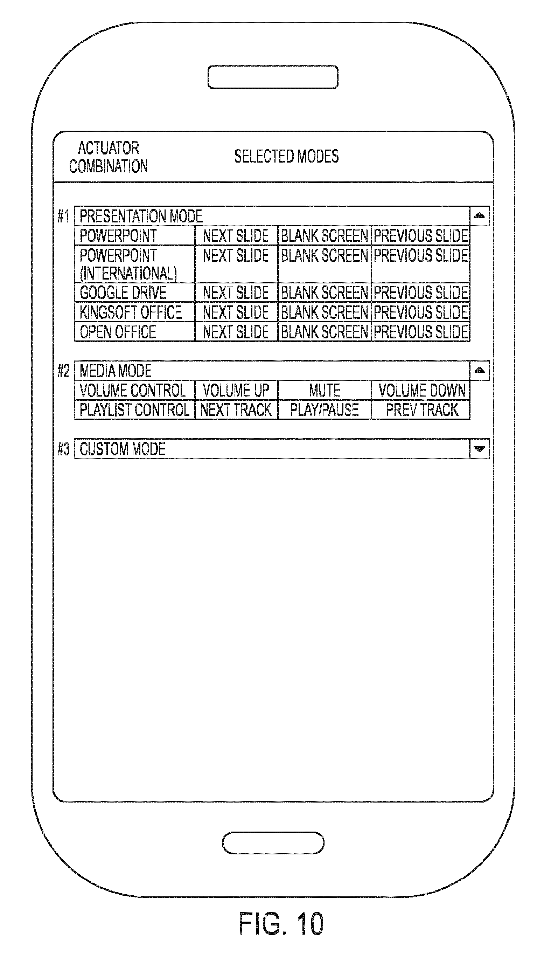

In such embodiments, while the first mode (e.g., Mode 1) and the second mode (e.g., Mode 2) may be set on the media controller 10, each of the modes may have different mode options. For example, as shown in Fig. 10, Mode 2 while remaining as a media mode also has different options within different types of media modes. For example, in a first media mode, the function actuators 25c-e are programmed to control the advancement of media tracks/objects. In contrast, while in a second media mode, the function actuators 25c-e are programmed to control the media volume. As also shown in Fig. 10, Mode 1 also includes different options within the presentation mode. For Mode 1, however, rather than changing the function associated with each function actuator 25c-e, each option of Mode 1 differs based on compatibility with different applications. In the illustrated example, Mode 1 may be compatible with Microsoft Office®, Google Drive®, Kingsoft Office®, etc. The user may choose a specific option of Mode 1 based on which application the user wishes to use. In the illustrated embodiment, the user may only access modes that are associated with different actuator combinations. In the example above, the slide show mode was assigned the same actuator combination as Mode 2. Therefore, one of the actuator combinations is changed or one of the modes remains unavailable to the user for operating the media controller 10. In some embodiments, the user may not define the actuator combination to overlap with any of the other stored modes, and an error message is displayed to the user if the modes overlap. In other embodiments, the user simply selects which mode he/she wants available for the operation of the media controller 10 even if the actuator combination is the same as a different mode. Although only the creation of a new mode has been described above, in some embodiments, the default modes can also be adjusted and customized by the user and updated via communication through the communication module 20. For example, the user can change the function associated with only the first function actuator 25c in the first mode to go from a down arrow key press to a play slide show function. The changes to the default or pre-programmed modes are then sent to the communication module 20 and stored in the computer readable medium 45.

Although the communication module 20 has been described as a wireless communication module 20, in some embodiments, the media controller 10 may additionally or alternatively include a data communication port (e.g., a micro-USB port) to perform wired data exchange with different electronic devices. In some embodiments, the data communication port may additionally be able to provide power to the media controller 10.

The user can also use the graphical user interface of an electronic device to customize the operation of the indicator. For example, the user may change the LED colors associated with each mode, the frequency of flashing, the brightness of the LED, etc. This information is sent via a wireless message from the electronic device to the communication module 20. The communication module 20 and the processor 50 receive the wireless message and implement the operational changes as indicated by the user.

In the illustrated embodiment, the processor 50 also detects periods of inactivity and enters a sleep mode when the processor 50 determines that the media controller 10 has been inactive for longer than a predetermined period of time. In the illustrated embodiment, the processor 50 enters a soft sleep mode or a hard sleep mode based on the time period of inactivity. In the soft sleep mode, the processor 50 disables the electronic components of the media controller 10 except for the control actuators 25a-f. The processor 50 enters the soft sleep mode when the processor determines that the media controller 10 has been inactive for a shorter period of time (e.g., one minute). The processor 50 monitors user input through the control actuators 25a-f to determine when to exit the soft sleep mode. In other words, the processor exits the soft sleep mode when any of the control actuators 25a-f is pressed by a user. Once the processor 50 exits the soft sleep mode, the media controller 10 continues to operate the same way as before the media controller 10 entered the soft sleep mode.

The processor 50 enters a hard sleep mode when the processor 50 determines that the media controller 10 has been inactive for a longer period of time (e.g., six minutes). During the hard sleep mode, the processor 50 disables the electronic components of the media controller 10, except for the mode actuator 25b. Therefore, the processor 50 exits the hard sleep mode when the mode actuator 25b is pressed by a user. Once the processor 50 exits the hard sleep mode, the media controller 10 continues to operate the same way as before the media controller 10 entered the hard sleep mode. In some embodiments, the processor 50 may leave a different control actuator 25a-f enabled during the hard sleep mode, such that the processor 50 exits the hard sleep mode only when the selected control actuator 25a-f is pressed by the user. Operating in a sleep mode after a period of detected inactivity allows the media controller 10 to maximize battery life.

As shown in Fig. 11, the electronic components described with respect to Fig. 2 are positioned on a circuit board 140 inside the media controller 10. The circuit board 140 is enclosed by a body 145 of the controller 10. In the illustrated embodiment, the body 145 includes a top portion 150 and a bottom portion 155. In the illustrated embodiment, the top portion 150 and the bottom portion 155 can be configured to snap fit together. In other embodiments, the top portion 150 and the bottom portion 155 are glued together, screwed in place together, or are secured with a clasp. When secured, the top portion 150 and the bottom portion 155 form an elongate device having a first end 160 and a second end 165 opposite the first end 160. In the illustrated embodiment, the body 145 of the media controller 10 is a generally cylindrical body that emulates the shape and size of a writing utensil (e.g., a pen). The body 145 includes a communication portion 170, a stylus portion 175, and a control portion 180. The communication portion 170, the stylus portion 175, and the control portion 180 are generally aligned along a longitudinal axis A of the body145. As shown by Fig. 11, the communication module 20 is positioned within the communication portion 170, the conductive tip 15 is supported by the stylus portion 175, and the control actuators 25a-f are supported by the control portion 180.

As shown in Fig. 11, the communication portion 170 and the stylus portion 175 are positioned on opposite ends of the media controller 10, and the control portion 180 is positioned between the communication and stylus portions 170, 175. In particular, the communication portion 170 is positioned at the first end 160, and the stylus portion 175 is positioned at the second end 165. Such opposite positioning of the stylus portion 175 and the communication portion 170 prompts the user to hold the media controller 10 correctly. In other words, the positioning of the stylus portion 175 and the communication portion 170 encourages the user to hold the media controller 10 at the stylus portion 175 when using the communication portion 170 so the user's hand does not interfere with the antenna of the communication module 20.

In the illustrated embodiment, the control portion 180 extends between the communication portion 170 and the stylus portion 175, thereby connecting the portions 170, 175. The control portion has a diameter 190 that is smaller than diameters 195 of the stylus portion 175 and/or the communication portion 170. In some embodiments, the body 145 is not cylindrical, but is instead another polygonal shape (e.g., a rectangular cuboid). In such embodiments, the control portion 180 may have a width that is smaller than widths of the stylus portion 175 and/or the communication portion 170.

As shown in Fig. 10, the control actuators 25a-f are discrete buttons. The function actuators 25c-e are arranged in a line on the top portion 150 of the body 145. Such positioning allows for intuitive location and use of the function actuators and allows the user to easily access all the function actuators 25c-e with just one hand. In other embodiments, the function actuators 25c-e may be arranged differently (e.g., in a circular arrangement). In other embodiments, the control actuators 25a-f may be rocker buttons, pressure sensitive surfaces, touch pads, or screens. In the illustrated embodiment, the control actuators 25a-f are positioned closer to the first end 160 and the communication portion 170 to again encourage the user to hold the media controller 10 in an optimum position. As shown in Fig. 12, the mode actuator 25b and the reset actuator 25f are positioned on the bottom portion 155 of the body 145. Placing these actuators on the bottom portion 155 of the media controller 10 inhibits accidental pressing of the actuators while still providing easy access to the user to the mode actuator 25b and the reset actuator 25f.

In the illustrated embodiment, the size and shape of the control portion 180 is configured such that the control portion 180 may be snap-fit or otherwise held in a holder designed for holding a stylus (e.g., a stylus clip or saddle), a pencil, a pen, a hand tool, etc. The holder may be, for example, part of a case or folio for a tablet computer. The body 145 also has a complimentary length for being held in such a holder (e.g., between 2 and 10 inches). The diameter 195 of the communication portion 170 and the stylus portion 175 may also have complementary diameters that allow the media controller 10 to fit alongside any item the holder may be attached to when the control portion 180 is being held in the holder. In some embodiments, the diameter 195 of the communication portion 170 and the stylus portion 175 may also be selected for alternatively being held in such a holder.

As shown in Fig. 12, the laser device 40 is positioned on the communication portion 170 of the body 145. This position of the laser device 40 also encourages the user to hold the media controller 10 from the stylus portion 175 when using the communication module 20. Otherwise, holding the media controller 10 from the communication portion 170 of the body 145 would obscure and hide the laser device 40.

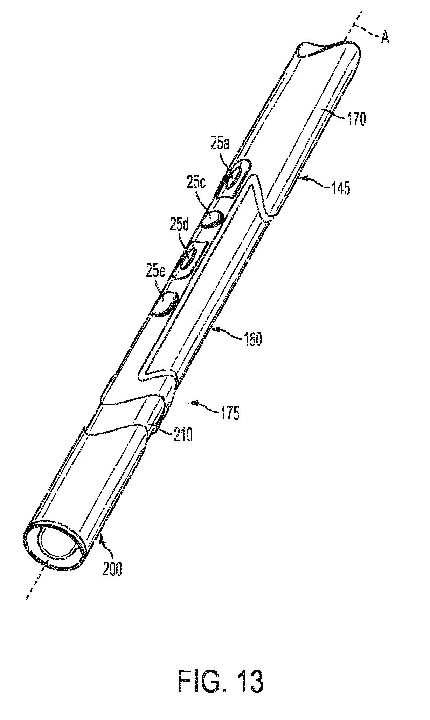

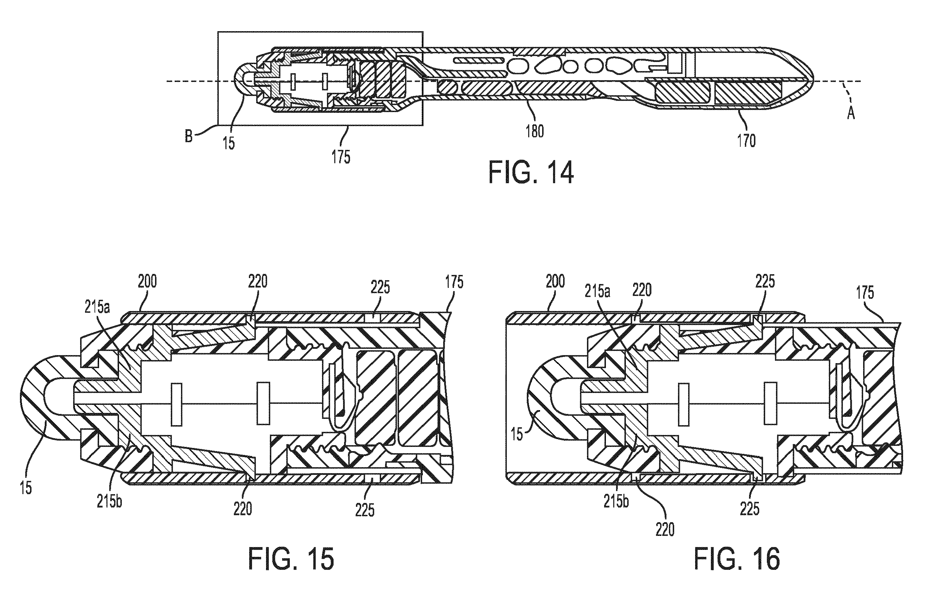

The illustrated stylus portion 175 includes a movable cover 200. The cover 200 is movable relative to the conductive tip 15 between a first position (Figs. 10 and 14) and a second position (Figs. 11 and 13). In the first position, the conductive tip 15 is exposed and accessible for use. In the second position, the conductive tip 15 is covered and generally protected by the movable cover 200. In the illustrated embodiment, the movable cover 200 is linearly slidable along the stylus portion 175 (e.g., along the longitudinal axis A) to change between the first position and the second position. In other embodiments, the cover 200 may be movable by other mechanisms (e.g., the cover 200 may be rotate) to selectively expose the conductive tip 15.

In the illustrated embodiment, the stylus portion 175 also includes a colored portion 210. The colored portion 210 is selectively exposed based on the position of the movable cover 200. In particular, the colored portion 210 is covered when the cover 200 is in the first position (Figs. 10 and 13) and is exposed when the cover 200 is in the second position (Figs. 11 and 14). The colored portion 210 is generally colored to contrast with the remainder of the body 145 so that a user can easily identify whether the conductive tip 15 is hidden. In other embodiments, the media controller 10 does not include the colored portion. Rather, the media controller 10 includes portions of different textures, reflectiveness, or otherwise distinct material.

In the illustrated embodiment, the cover 200 includes a touch sensitive material and is able to communicate with the processor 50. For example, in the illustrated embodiment, the cover 200 is a metal cover that detects through capacitive changes when a user touches the cover 200 (e.g., to use the conductive tip 15). In other embodiments, the media controller 10 may detect a user's touch on the cover 200 by monitoring changes in temperature, or other similar parameters. When the processor 50 detects a user's touch on the cover 200, the processor 50 activates the conductive tip 15 and, in some embodiments, disables the communication module 20. In other words, the processor 50 switches from operating in a stylus mode in which the conductive tip 15 is activated and the communication module 20 is disabled to operating in a controller mode in which the conductive tip 15 is disabled and the communication module 20 is activated. In the illustrated embodiments, the processor switches from the stylus to the controller mode in response to detecting a user input (e.g., touch) on the cover 200. In some embodiments, the media controller 10 the cover 200 is not movable. In such embodiments, the media controller 10 can still detect when the cover 200 is touched regardless of whether the cover 200 is movable.

Fig. 14 is a cross-section of the media controller 10 taken along the longitudinal axis A. Figs. 13 and 14 illustrate enlarged views of the boxed in portion of Fig. 14. As shown in Figs. 13 and 14, the stylus portion 175 includes biasing members 215a-b that extend radially outward. The cover 200 includes a first detent 220 and a second detent 225. The biasing members 215a-b selectively engage the detents 220, 225 to hold the cover 200 in the first position or the second position. As shown in Fig. 15, when the cover 200 is in the first position, the biasing members 215a-b engage the first detent 220. The cover 200 is then inhibited from moving to the second position unless sufficient force is applied. As shown in Fig. 16, when the cover 200 is in the second position, the biasing members 215a-b engage the second detent 225. The cover 200 is then inhibited from moving to the first position unless sufficient force is applied. In the illustrated embodiment, the stylus portion 175 may also include guide rails to guide the biasing members 215a-b when the cover 200 slides between the first position and the second position.

Referring back to Fig. 11, the battery receptacle 55 is positioned within the stylus portion 175. In the illustrated embodiment, the conductive tip 15 is attached to the rest of the body 145 via a threaded interface 230. The conductive tip 15 can be unscrewed from the rest of the body 145 to expose the battery receptacle 55. The user can then remove and/or replace a battery from the battery receptacle 55.

Thus, the invention provides, among other things, a media controller including both a stylus conductive tip and a communication module to communicate with an electronic device. Various features and advantages of the invention are set forth in the following claims.

## Claims

1. A media controller (10) for controlling an electronic device, the media controller comprising:
a body (145) including a communication portion (170), a stylus portion (175), and a control portion (180);
a short-range communication module (20) positioned in the communication portion (170);
a conductive tip (15) supported by the stylus portion (175), the conductive tip (15) configured to interact with a touch sensitive screen of the electronic device;
an actuator (25a-e) supported by the control portion (180);
a processor (50) positioned within the body (145) and coupled to the short-range communication module (20), the processor (50) operable to
- send a first command, while in a first mode, to the electronic device using the short-range communication module (20),
- receive a user input through the actuator (25a-e),
- switch from the first mode to a second mode in response to the user input, and
- send a second command, while in the second mode, to the electronic device using the short-range communication module (20), the second command being different than the first command.

2. The media controller of claim 1, wherein the actuator (25a-e) is a first actuator (25b), and further comprising a second actuator (25a, 25c, 25d, 25e) supported by the control portion (180), wherein the processor (50) is operable to send the first command and the second command in response to actuation of the second actuator (25a, 25c, 25d, 25e), wherein the processor (50) preferably is operable to receive the user input through a combination of the first actuator (25b) and the second actuator (25a, 25c, 25d, 25e).

3. The media controller of claim 1, wherein the user input is a first user input, and wherein the processor (50) is further operable to
- receive a second user input through the actuator (25a-e),
- switch from the second mode to a third mode in response to the second user input, and
- send a third command, while in the third mode, to the electronic device using the short-range communication module (20), the third command being different than the first command and the second command.

4. The media controller of claim 1, wherein the actuator (25a-e) is a first actuator (25b) and the user input is a first user input, and further comprising a second actuator (25d) and a third actuator (25e) supported by the control portion (180), wherein the processor (50) is operable to
- receive the first user input through a combination of the first actuator (25b) and the second actuator (25d) to operate in the second mode,
- receive a second user input through a combination of the first actuator (25b) and the third actuator (25e),
- switch from the second mode to a third mode in response to the second user input, and
- send a third command, while in the third mode, to the electronic device using the short-range communication module (20), the third command being different than the first command and the second command.

5. The media controller of any of the preceding claims, further comprising a battery receptacle positioned within the body and coupled to the processor and the short-range communication module, wherein the battery receptacle is configured to receive a battery, wherein preferably the conductive tip is removable from the body to expose the battery receptacle.

6. The media controller of any one of the preceding claims, wherein the communication portion (170), the stylus portion (175) and the control portion (180) are generally aligned along a longitudinal axis (A) of the body (145), and wherein the control portion (180) is positioned between the communication portion (170) and the stylus portion (175).

7. The media controller of any one of the preceding claims, wherein the processor (50) is operable to receive a data message from the electronic device, the data message including parameters for defining a new operational mode of the media controller (10).

8. A media controller (10) for controlling an electronic device, the media controller comprising:
a generally cylindrical body (145) having a longitudinal axis (A), the generally cylindrical body including a communication portion (170), a stylus portion (175), and a control portion (180) aligned along the longitudinal axis (A);
a short-range communication module (20) positioned in the communication portion (170);
a conductive tip (15) supported by the stylus portion (175), the conductive tip (15) configured to interact with a touch sensitive screen of the electronic device;
a first actuator (25b) supported on a first side of the control portion (180);
a plurality of actuators (25a, 25c, 25d, 25e) supported on a second side of the control portion (180);
a processor (50) positioned within the body (145) and coupled to the short-range communication module (20), the processor (50) operable to
- send a first command, while in a first mode, to the electronic device using the short-range communication module (20) in response to actuation of one of the plurality of actuators (25a, 25c, 25d, 25e),
- receive a user input through the first actuator (25b),
- switch from the first mode to a second mode in response to the user input, and
- send a second command, while in the second mode, to the electronic device using the short-range communication module (20) in response to actuation of one of the plurality of actuators (25a, 25c, 25d, 25e), the second command being different than the first command.

9. The media controller of claim 10, further comprising a laser device (40) supported by the generally cylindrical body (145), wherein one (25a) of the plurality of actuators (25a, 25c, 25d, 25e) is coupled to the laser device (40) to control the laser device (40).

10. A method of controlling an electronic device with a media controller (10), the media controller (10) including a body (145) having a communication portion (170), a stylus portion (175), and a control portion (180), a short-range communication module (20) positioned in the communication portion (170), a conductive tip (15) supported by the stylus portion (175), an actuator (25a-e) supported by the control portion (180), and a processor (50) positioned within the body (145) and coupled to the short-range communication module (20), the method comprising:
- interacting with a touch sensitive screen of the electronic device using the conductive tip (15);
- sending a first command, while in a first mode, to the electronic device using the short-range communication module (20);
- receiving a user input through the actuator (25a-e);
- switching from the first mode to a second mode in response to the user input; and
- sending a second command, while in the second mode, to the electronic device using the short-range communication module (20), the second command being different than the first command.

11. The method of claim 10, wherein the actuator is a first actuator (25b), wherein the media controller further includes a second actuator (25a, 25c, 25d, 25e) supported by the control portion (180), wherein sending the first command includes sending the first command, while in the first mode, in response to actuation of the second actuator(25a, 25c, 25d, 25e), and wherein sending the second command includes sending the second command, while in the second mode, in response to actuation of the second actuator (25a, 25c, 25d, 25e), wherein receiving the user input preferably includes receiving the user input through a combination of the first actuator (25b) and the second actuator (25a, 25c, 25d, 25e).

12. The method of claim 10, wherein the user input is a first user input, and further comprising:
- receiving a second user input through the first actuator (25b);
- switching from the second mode to a third mode in response to the second user input; and
- sending a third command, while in the third mode, to the electronic device using the short-range communication module (20), the third command being different than the first command and the second command.

13. The method of claim 10, wherein the actuator is a first actuator (25b) and the user input is a first user input, wherein the media controller further includes a second actuator (25d) and a third actuator (25e) supported by the control portion, and further comprising:
- receiving the first user input through a combination of the first actuator (25b) and the second actuator (25d) to operate in the second mode;
- receiving a second user input through a combination of the first actuator (25b) and the third actuator (25e);
- switching from the second mode to a third mode in response to the second user input; and
- sending a third command, while in the third mode, to the electronic device using the short-range communication module (20), the third command being different than the first command and the second command.

14. The method of claim 10, wherein the media controller (10) includes a memory (45) positioned within the body (145), and further comprising:
- receiving a wireless message from an electronic device, the wireless message including parameters for defining a new operational mode; and
- storing the new operational mode in the memory (45),
wherein defining the new operational mode preferably includes assigning a function to the actuator (25a-e) that is different than the first command and the second command.

15. The method of claim 10, wherein the media controller (10) includes a memory (45) positioned within the body (145), and further comprising:
- receiving a wireless message from an electronic device, the wireless message including parameters for adjusting the first mode; and
- storing the parameters for adjusting the first mode in the memory (45),
wherein adjusting the first mode preferably includes assigning a function to the actuator (25a-e) that is different than the first command.
